# EUROPÄISCHE PATENTSCHRIFT

(11) **EP 3 094 008 B1**
(45) Veröffentlichungstag und Bekanntmachung des Hinweises auf die Patenterteilung: **16.08.2017**
(21) Anmeldenummer: 15167834.9
(22) Anmeldetag: 15.05.2015
(51) Int. Cl.: H04B 3/54, G08C 19/00, H02J 50/00

(54) **VERFAHREN UND VORRICHTUNG ZUR DATENÜBERTRAGUNG AUF ENERGIEÜBERTRAGENDEN ELEKTRISCHEN LEITUNGEN**
METHOD AND DEVICE FOR DATA TRANSMISSION ON ENERGY TRANSMITTING ELECTRICAL LINES
PROCÉDÉ ET DISPOSITIF DE TRANSMISSION DE DONNÉES SUR DES LIGNES ÉLECTRIQUES TRANSMETTANT DE L'ÉNERGIE

(43) Veröffentlichungstag der Anmeldung: 16.11.2016
(73) Patentinhaber: Fronius International GmbH, 4643 Pettenbach (AT)
(72) Erfinder: Fasthuber, Christian, 4600 Wels (AT); Lohninger, Ewald, 4863 Seewalchen am Attersee (AT); Hofer, Bernd, 4654 Bad Wimsbach (AT)
(74) Vertreter: Patentanwälte Pinter & Weiss OG

(56) Entgegenhaltungen:
- CA-C- 2 223 666
- DE-A1-102006 059 689
- DE-A1-102011 007 912
- US-A1- 2003 018 422
- US-B1- 6 507 573

## Beschreibung

Die gegenständliche Erfindung betrifft ein Verfahren, sowie eine Vorrichtung, zur Datenübertragung in einer Anordnung mit einer Mehrzahl von Sendeeinheiten und einer Mehrzahl von Empfangseinheiten, wobei jede Sendeeinheit über eine zumindest teilweise ungeschirmte elektrische Leitung mit einer Empfangseinheit verbunden wird und über die Leitungen mit jeweils einem elektrischen Grundsignal elektrische Energie übertragen wird, wobei in zumindest einer Sendeeinheit Daten auf das jeweilige Grundsignal aufmoduliert, über die Leitung an die verbundene Empfangseinheit übertragen und in der Empfangseinheit durch Demodulation rückgewonnen werden.

In vielen elektrotechnischen Anlagen wird elektrische Energie von einer Stromquelle bereitgestellt und über eine Leitung zu einer Stromsenke übertragen. Für den oftmals notwendigen Informationsaustausch zwischen Stromquelle und Stromsenke ist eine Datenübertragung zwischen der Sende- bzw. Empfangseinheit der Stromquelle und der Empfangs- bzw. Sendeeinheit der Stromsenke erforderlich. Hierzu werden oft separate Datenleitungen zur Datenübertragung genutzt, was allerdings sowohl einen erhöhten Arbeits- wie Materialaufwand bedeutet. Teilweise kommen auch drahtlose Kommunikationssysteme zum Einsatz, die aber im industriellen Umfeld aufgrund von Funkschatten, elektromagnetischen Störungen, etc. nicht immer fehlerfrei funktionieren und auch meist mit erhöhtem Aufwand für Sende- und Empfangseinheit verbunden sind.

Es ist daher wünschenswert, für die Datenübertragung die bereits vorhandene Leitung zur Energieübertragung zu nutzen. Die Möglichkeit der Datenübertragung über eine energietransportierende Leitung ist allgemein bekannt und wird mit Powerline Communication (PLC) bezeichnet. Beispiele dafür sind in verschiedenen Standards, insbesondere Homeplug AV und Homeplug GP der Homeplug Alliance und ITU 9955, sowie IEEE 1901 definiert. Dabei werden bekanntermaßen Datensignale in Form einer hochfrequenten elektrischen Spannung von einer Sendeeinheit auf ein Grundsignal zur Energieübertragung aufmoduliert und mit dem Grundsignal übertragen. Die Empfangseinheit kann das aufmodulierte Datensignal durch Demodulation rückgewinnen und auswerten. Die Verwendung von gängigen PLC-Protokollen hat sich in verschiedenen Anwendungen durch ihre im Allgemeinen störunanfällige Datenübertragung bewährt.

Jedoch treten im industriellen Umfeld zusätzliche Probleme auf, die mit gängiger Powerline Communication nicht beherrscht werden können, insbesondere bei Anordnungen mehrerer energieübertragender, nebeneinander befindlichen Leitungen. Aufgrund der hochfrequenten Übertragungsmethode der Standard-PLC, den hohen Signalpegeln und den hohen Störpegeln auf der meist ungeschirmten, energieübertragenden Leitung tritt häufig ein starkes Übersprechen der aufmodulierten Datensignale auf benachbarte Leitungen auf. Das Datensignal kann dabei durch Übersprechen auf benachbarte Leitungen einkoppeln und kann die dort ablaufende Datenkommunikation stören oder sogar unmöglich machen.

Ähnliche Probleme können auch bei der benachbarten Verwendung von mehreren Schweißbrennern bei der eventuell erforderlichen Datenübertragung zwischen Schweißstromquelle und Drahtvorschub im Schweißbrenner auftreten. Ebenso kann ein Übersprechen der Datenübertragung in Photovoltaikanlagen Probleme verursachen, insbesondere in Anlagen in denen mehrere Photovoltaikmodule über benachbarte Leitungen in einen gemeinsamen DC-Bus einspeisen.

Die DE 10 2011 007912 A1 schlägt dementsprechend ein Verfahren zur Datenübertragung zwischen einer als Ladegerät einer Ladestation ausgebildeten Energiequelle und einer als Elektrofahrzeug ausgebildeten Energiesenke vor. Ziel des Verfahrens ist der Aufbau einer adressbasierten Datenübertragung zwischen Sende- bzw. Empfangseinheit von Ladesteuereinheit und Energiespeicher-Überwachungsmodul. Dazu werden die zur Adressvergabe notwendigen Daten über einen ersten, ausschließlich von Ladesteuereinheit und Energiespeicher-Überwachungsmodul nutzbaren Datenübertragungskanal mittels Pulsweiten-Modulation ausgetauscht. Die nachfolgende Datenübertragung wird dann über den nur gemeinsam nutzbaren Datenübertragungskanal mit einer standardisierten Powerline Communication durchgeführt. In der DE 10 2011 007912 A1 wird vorgeschlagen, beide Datenübertragungskanäle mit nur einem physikalischen Medium, insbesondere denselben Leitern eines Kabels zu realisieren. Nachteilig hat sich herausgestellt, dass die Anwendung des in der DE 10 2011 007912 A1 vorgeschlagenen Verfahrens auf der ungeschirmten Ladeleitung aufgrund der hohen Ladeströme und den von den Ladegeräten verursachten Störungen nicht praktikabel ist.

Es ist eine Aufgabe der gegenständlichen Erfindung, eine Datenübertragung zwischen einer Sendeeinheit und einer über eine Leitung damit verbundene Empfangseinheit zu schaffen, bei dem ein Übersprechen auf benachbarte Leitungen verhindert wird.

Diese Aufgabe wird durch die vorliegende Erfindung gelöst, indem zur Vermeidung von Übersprechen auf andere Leitungen, die Daten in zumindest einer Sendeeinheit mittels eines Bandspreizverfahrens gespreizt, dem Grundsignal aufmoduliert und über die Leitung übertragen werden und nach Übertragung in der verbundenen Empfangseinheit durch Demodulation und Entspreizung zurückgewonnen werden. Da die Daten mithilfe der Spreizung mit erhöhter Bandbreite übertragen werden können, kann dies einen niedrigeren Signalpegel für die Übertragung erlauben. Dieser niedrigere Signalpegel kann somit zur Vermeidung von Übersprechen beitragen, da die Höhe des Übersprechsignals meist direkt proportional zum Signalpegel ist. Dieses Vorgehen hat zusätzlich den Vorteil, dass die Datenübertragung selbst gegenüber Störsignalen und Übersprechen von anderen Leitungen invariant ist, was die Robustheit des Übertragungsverfahrens erhöht.

Ebenso wird eine Vorrichtung zur Realisierung dieses Verfahrens angegeben, wobei in der zumindest einen Sendeeinheit eine Spreizeinheit und ein Modulator vorgesehen sind, wobei die Spreizeinheit Daten mittels eines Bandspreizverfahrens spreizt und der Modulator die daraus resultierenden gespreizten Daten auf das Grundsignal aufmoduliert und in der verbundenen Empfangseinheit ein Demodulator und eine Entspreizeinheit vorgesehen ist, wobei der Demodulator das Empfangsdatensignal demoduliert, und die Entspreizeinheit die daraus erhaltenen Empfangsdaten mittels des Bandspreizverfahrens entspreizt, um die Daten rückzugewinnen.

Als Bandspreizverfahren kann vorteilhafterweise das Verfahren des Direct Sequence Spread Spectrum angewandt werden. Hierbei werden die zu übertragenden Daten mit einer festen Codefolge, beispielsweise über eine Exklusive-Oder (XOR) Verknüpfung verknüpft und somit die Bandbreite des Sendedatensignals erhöht. Diese Erhöhung der Bandbreite kann bewirken, dass das Sendedatensignal mit einer geringeren Amplitude als der des Störsignals übertragen und dennoch detektiert werden kann.

Als Codefolgen können beispielsweise Pseudo Random Noise (PN)-Folgen dienen. Insbesondere Barker-Codes sind vorteilhaft, da bei einer Aneinanderreihung mehrerer Barker-Codes die ursprüngliche Codefolge idealerweise niemals folgenübergreifend wiederholt werden.

Auf der Empfängerseite kann zur Entspreizung des Empfangsdatensignals die Korrelationsfunktion des Empfangsdatensignals mit der Codefolge, welche schon zur Spreizung verwendet wurde, gebildet werden. Weiters ist die Verwendung eines adaptiven Schwellwertentscheiders, beispielsweise eines Maximum Likelihood Detector vorteilhaft.

Die Aufmodulation der zu übertragenden Daten auf das Grundsignal kann mittels Amplitude Shift Keying (ASK), insbesondere On-Off Keying (OOK) erfolgen. Bei der ASK werden die Daten aufmoduliert, indem die Amplitude des Grundsignals variiert wird. Das OOK stellt eine besonders einfach zu realisierende Variante des ASK dar, wobei hierbei die zu übertragenden Daten binär codiert werden: Es wird nur zwischen einer Ein-Phase und einer Aus-Phase unterschieden. In diesem Zusammenhang ist es weiters vorteilhaft, wenn ein, vorzugsweise niederfrequentes, Stromsignal auf das Grundsignal aufmoduliert wird. Die Daten werden dabei als Stromsignal übertragen, im Gegensatz zu Spannungssignalen bei herkömmlicher PLC. Damit kann erreicht werden, dass die Spannungspegel auf der energieübertragenden Leitung im Wesentlichen unbeeinflusst bleiben.

Eine vorteilhafte Realisierung des ASK kann derart erfolgen, indem die Variation des Grundsignals durch Umwandlung eines Teils der Grundenergie in Form von Impedanzänderungen erfolgt. Dies kann bedeuten, dass ein Teil der Grundenergie beispielsweise an einem Widerstand abfällt und somit in Wärme umgewandelt wird.

Die Vorrichtung zur Modulation mittels ASK kann ausgeführt sein, indem eine Konstantstromsenke mit einem schaltenden Element kombiniert wird. Diese Konstantstromsenke kann durch eine Konstantspannungsquelle und einen Widerstand in einfacher Weise realisiert werden, als schaltendes Element kann beispielsweise ein MOSFET dienen.

Die zu übertragenden Daten können vorteilhafterweise vor dem Spreizen mit einem Fehlerkorrekturverfahren codiert und nach dem Entspreizen mit dem Fehlerkorrekturverfahren decodiert werden. Eine Möglichkeit der Fehlerkorrektur stellt die sogenannte Forward-Error-Correction (FEC) dar. Hierbei wird durch Codierung der Daten eine gewisse Redundanz erzeugt wodurch die übertragenen Daten trotz eventuell auftretender Bitfehler nach Decodierung rekonstruiert werden können. Eine mögliche Art der FEC stellt der sogenannte Hamming(7,4) Block Code dar. Dieser Code ermöglicht es einen Bitfehler in einem vier Bit-Nutzblock zu korrigieren, wobei hierzu insgesamt 7 Bits übertragen werden müssen.

Im Falle von Burst-Fehlern, das bedeutet dass beispielsweise durch Störungen bei der Übertragung mehrere Bits in Folge von Fehlern betroffen sind, kann es bei Anwendung einer Block-FEC zu nicht korrigierbaren Fehlern kommen. In diesem Fall kann ein Verschachtelungselement, auch Interleaver genannt, Abhilfe schaffen. Die Verschachtelung verschachtelt die Bits ineinander, sodass ursprünglich aufeinanderfolgende Daten über einen größeren Datenbereich verstreut werden. Ein auftretender Burst-Fehler betrifft dann ursprünglich nicht aufeinanderfolgende Bits. Anders herum betrachtet wird ein Burst-Fehler also durch die Entschachtelung sozusagen in einzelne Bitfehler "zerlegt" welche durch das oben genannte Fehlerkorrekturverfahren wiederum korrigiert werden können.

Gängige PLC-Verfahren sind wie erwähnt gegen Störungen unempfindlich. Wegen des starken Übersprechens auf ungeschirmten Leitungen werden bei der Anwendung von PLC-Verfahren die nebeneinander befindlichen Leitungen hinsichtlich der Datenübertragung jedoch zu einem nur gemeinsam benutzbaren Datenübertragungskanal, obwohl die Leitungen physisch getrennt sind. Bei einem nur gemeinsam benutzbaren Datenübertragungskanal wird mit Unicast die Übertragung von Daten zwischen einer Sendeeinheit und einer einzigen Empfangseinheit bezeichnet, die für die Datenübertragung zwischen einer Stromquelle und der mit ihr über einer Leitung verbundenen Stromsenke erforderlich ist. Für eine Unicast Übertragung ist für die Empfangseinheit eine eindeutige Kennung bzw. Adresse zur Identifikation des Empfängers zwingend erforderlich. Nachteilig kann bei einer im Betrieb veränderlichen Anordnung von Sender und / oder Empfänger eine eindeutige Kennung bzw. Adresse üblicherweise nicht im Vorhinein vergeben werden. Abhilfe kann auch hierbei durch das beschriebene Verfahren geleistet werden. Es kann also eine eindeutige Kennung zwischen einer Stromquelle und einer zugehörigen Stromsenke übermittelt werden. Vorteilhafterweise handelt es sich bei dieser eindeutigen Kennung um eine Adresse, zusätzlich können weitere Daten wie beispielsweise auch Daten zur zyklischen Redundanzprüfung (CRC) mit übermittelt werden. CRC-Daten sind für die Paritätsprüfung der übertragenen Daten von Vorteil, um trotz Fehlerkorrektur auftretende Fehler zu detektieren.

Da die eindeutige Kennung wie oben beschrieben gegen Störungen und Übersprechen unempfindlich ist, ist es möglich nach erfolgreicher Übermittlung der eindeutigen Kennung eine Kommunikation zwischen Stromquelle und zugehöriger Stromsenke über gängige PLC-Verfahren weiter zu führen. Ein vorhandenes Übersprechen kann in weiterer Folge toleriert werden, da die zuvor übermittelte eindeutige Kennung bei der weiteren Kommunikation mitgesendet werden kann und somit jede Stromquelle die zugehörige Stromsenke und umgekehrt adressieren kann.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Übersicht der energieübertragenden Infrastruktur
Fig.2 den Aufbau einer Sendeeinheit TS und einer Empfangseinheit TE
Fig.3 den möglichen Aufbau eines Modulators M1
Fig.4 den Datenvorbereitungsblock der Datenquelle Azur Datenmanipulation der Rohdaten D0
Fig.5 den Datennachbereitungsblock der Datensenke B zur Rekonstruktion der Rohdaten D0

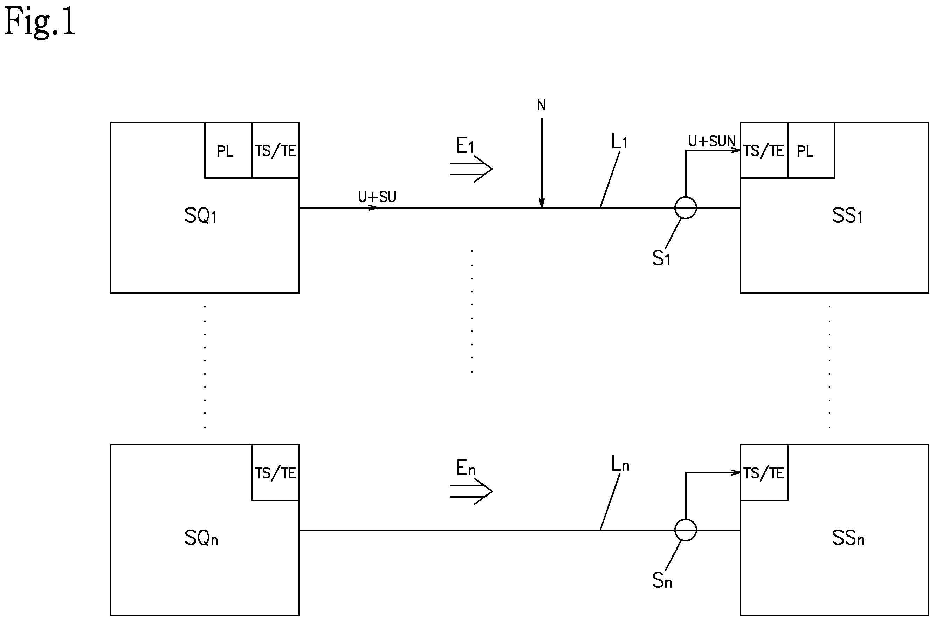

Fig.1 zeigt beispielhaft ein energieübertragendes System zur Beschreibung der vorliegenden Erfindung. Eine oder mehrere Stromquellen SQ₁,...,SQₙ werden über jeweils eine physische, elektrische Energie E₁,...,Eₙ übertragende Leitung L₁,...,Lₙ mit zugehörigen Stromsenken SS₁,..., SSₙ verbunden. Dabei wird elektrische Energie E₁,...,Eₙ von den Stromquellen SQ₁,...,SQₙ zu den daran über die zugehörige Leitung L₁,...,Lₙ angeschlossenen Stromsenken SS₁,...,SSₙ übertragen. Für eine Datenübertragung zwischen Stromquellen SQ₁,...,SQₙ und zugehörigen Stromsenken SS₁,...,SSₙ befinden sich sowohl an den Stromquellen SQ₁,..., SQₙ, als auch an den zugehörigen Stromsenken SS₁,...,SSₙ Sendeeinheiten TS und Empfangseinheiten TE. Je nachdem ob eine unidirektionale oder bidirektionale Datenübertragung durchgeführt wird, kann eine unterschiedliche Anordnung von Sendeeinheiten TS und Empfangseinheiten TE erforderlich sein. In Fig.1 befinden sich alle Stromquellen SQ₁,...,SQₙ, sowie alle Stromsenken SS₁,..., SSₙ auf jeweils derselben Seite, was nur eine mögliche Anordnung darstellt. Allgemein sind beliebige Anordnungen der Stromquellen SQ₁,...,SQₙ und Stromsenken SS₁,...,SSₙ vorstellbar. Durch die zumindest teilweise nebeneinander liegenden und zumindest teilweise ungeschirmten, Leitungen L₁,...,Lₙ kann es aufgrund von parasitären Induktivitäten und Kapazitäten zu elektromagnetischem Übersprechen zwischen den Leitungen L₁,...,Lₙ kommen. Optional sind zur Datenübertragung zusätzliche PLC-Einrichtungen PL angebracht. Wie der Fig.1 entnehmbar ist, können diese PLC-Einrichtungen PL bei Stromquellen SQ und/oder Stromsenken SS vorgesehen sein.

Die Energieübertragung auf der Leitung L wird durch ein elektrisches Grundsignal U bewirkt, das oftmals durch Stromsensoren S₁,...,Sₙ an Stromsenken SS₁,...,SSₙ oder Stromquellen SQ₁,...,SQₙ erfasst wird, um den Energiefluss zu überwachen. Im Ausführungsbeispiel nach Fig.1 sind Stromsensoren S₁,...,Sₙ im Bereich der Stromsenken SS₁,...,SSₙ vorgesehen. Dabei wird das Grundsignal U üblicherweise von einem Störsignal N überlagert. Dieses Störsignal N kann sich aus Rauschen und Übersprechen zusammensetzen, kann aber auch durch die Energiewandlung in der Stromquelle SQ oder der Stromsenke SS bedingt sein. So weisen zum Beispiel die hohen Ströme bei der Ladung eines Energiespeichers neben ihrem Gleichstromanteil oft ein unerwünschtes, überlagertes Wechselstromsignal auf, das als Störsignal N interpretiert werden kann. Dieses Störsignal N wird von der Stromquelle SQ bei der Bereitstellung der Energie E für die Stromsenke SS durch die Energieumwandlung miterzeugt und auf die Leitung L eingespeist. Dabei ist dieses Störsignal N meist niederfrequent bis in den Bereich einiger 100 Hz bzw. maximal weniger 1000 Hz und weist aufgrund der hohen Energieübertragung eine Amplitude im Bereich mehrerer Ampere auf.

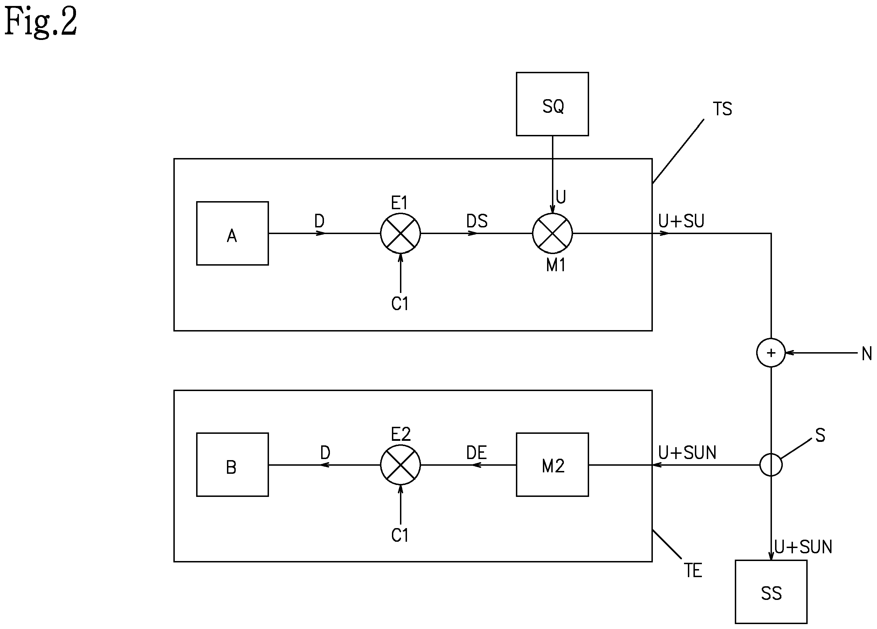

Es wird in Folge anhand der Fig.2 beispielhaft das Verfahren zur Datenübertragung zwischen einer Sendeeinheit TS und einer Empfangseinheit TE detailliert beschrieben. Dabei ist für das Verfahren vorerst irrelevant, wo sich Sendeeinheit TS und Empfangseinheit TE befinden, sie müssen lediglich über eine energieübertragende Leitung L verbunden sein.

In der Sendeeinheit TS werden die aus der Datenquelle A erhaltenen Daten D, die übertragen werden sollen, mit einem Bandspreizverfahren, z.B. mit dem bekannten Direct Sequence Spread Spectrum (DSSS) Verfahren, in einer Spreizeinheit E1 gespreizt, was zum Erhalt der gespreizten Nutzdaten DS führt. Das Spreizen der Daten D erfolgt beispielsweise durch eine Exklusive-Oder (XOR) Verknüpfung der Daten D mit einer vorgegebenen Codefolge C1.

Der nachfolgende Modulator M1 moduliert die gespreizten Nutzdaten DS in Form eines Stromsignals auf das Grundsignal U auf, was zum Erhalt des Sendedatensignals SU auf der Leitung L führt. Auf der Leitung L wird also das Grundsignal U und das Sendedatensignal SU übertragen. Dadurch wird das Stromsignal des Grundsignals U moduliert und nicht das Spannungssignal. Das Spannungssignal des Grundsignals U kann sich durch das Aufmodulieren eines Stromsignals zwar auch ändern, doch kann davon ausgegangen werden, dass diese Änderungen aufgrund der geringen Impedanz in einem energieübertragenden System nur sehr gering, wenn nicht vernachlässigbar ist. Das aufmodulierte Stromsignal ist vorzugsweise ein niederfrequentes Stromsignal, dessen Frequenzband im Bereich des Frequenzbandes des Störsignals N (einige 100 Hz bis wenige 1000 Hz) oder darunter liegt.

Das Grundsignal U selbst wird durch die Energieübertragung auf der Leitung L (vgl. Fig.1) zur Verfügung gestellt. Der Modulator M1 kann beispielsweise Amplitude Shift Keying (ASK) als Modulationsverfahren verwenden. Bei der ASK werden die zu modulierenden gespreizten Nutzdaten DS als Variation der Amplitude des Grundsignals U codiert.

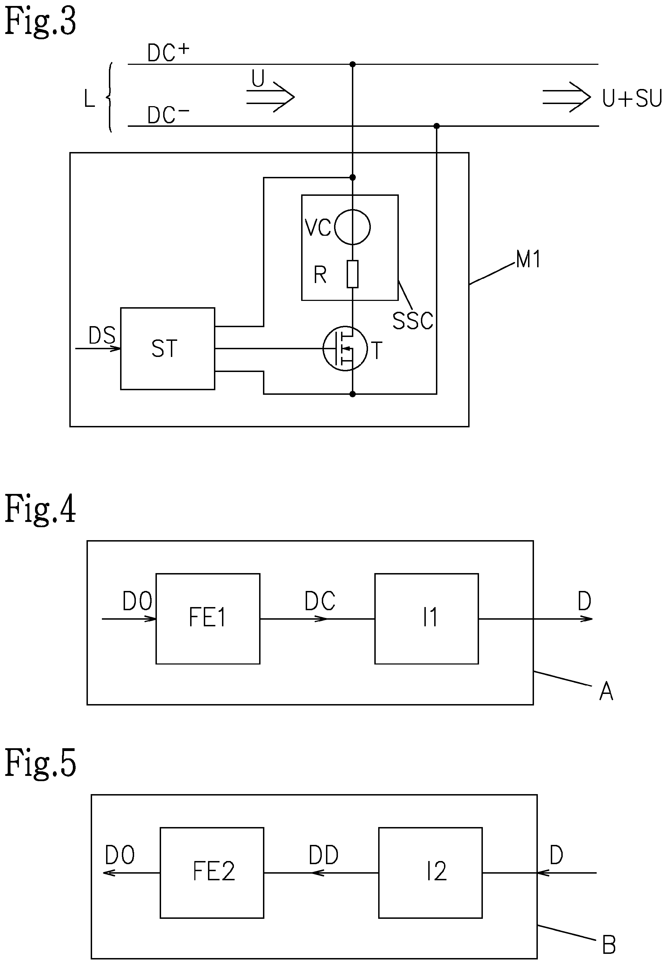

Als schaltungstechnisch besonders einfache Variante der ASK bietet sich On-Off-Keying an, wobei im gezeigten Beispiel entsprechend Fig. 3 ein Halbleiterschalter T, z.B. ein MOSFET, als Schalter dient, welcher von der Steuereinheit ST das Signal zum Schalten erhält. Bei diesem Ausführungsbeispiel wird ein Teil der Grundsignalenergie im Modulator M1 an einem Widerstand R verbraucht bzw. in Wärme umgewandelt. Um die Amplitude des Stromsignals der aufmodulierten gespreizten Nutzdaten DS konstant zu halten, bietet sich die Verwendung einer Konstantstromsenke SSC an. Diese kann als Kombination einer linearen Konstantspannungsquelle VC und eines Widerstandes R realisiert werden, was einen geringen schaltungstechnischen Aufwand darstellt. In Fig.3 ist eine derartige Schaltung beispielhaft skizziert. Die Leitung L setzt sich in diesem Fall aus den beiden Gleichstromleitungen DC⁺ und DC⁻ zusammen.

Der Modulator M1 moduliert somit die gespreizten Nutzdaten DS auf das Grundsignal U, das von der Stromquelle SQ stammt, auf, indem er dem Grundsignal U Energie entzieht und es in Wärme umwandelt. Diese Methode besticht sowohl durch ihre einfache Realisierbarkeit als auch Effizienz, um das Sendedatensignal SU in Form eines Stromsignals zu übertragen.

Durch die gespreizte und somit mit einer erhöhten Bandbreite durchgeführte Übertragung des Sendedatensignals SU wird die Übertragung mit einer kleineren Signalamplitude als der des Störsignals N möglich.

Das an der Empfangseinheit TE erhaltene und vom Störsignal N überlagerte Empfangsdatensignal SUN kann nun einem Demodulator M2 zugeführt werden, um es vom Grundsignal U, das der Stromsenke SS zugeführt wird, zu trennen. Die Empfangseinheit TE empfängt also das Grundsignal U plus Empfangsdatensignal SUN. Vorteilhafterweise wird der Demodulator M2 durch einen Filterblock realisiert, wobei ein Stromsensor S dazu dient das Empfangsdatensignal SUN mitsamt dem Grundsignal U abzugreifen. Sendedatensignal SU und Empfangsdatensignal SUN sind zum besseren Verständnis auch in Fig. 1 eingezeichnet. Ein Stromsensor S ist üblicherweise bereits zu Zwecken der Regelung des Energieflusses, z.B. zur Ladesteuerung, vorhanden, kann aber auch nachgerüstet werden. Mit einem günstig gewählten Filter kann auch einen Teil des Störsignals N herausgefiltert werden, um eine verbesserte Korrelation bei der Entspreizung erzielen zu können. Die durch die Demodulation gewonnenen Empfangsdaten DE werden in einer Entspreizeinheit E2 im Zuge des angewendeten Spreizverfahrens wiederum mit der vorgegebenen, gleichen Codefolge C1 verknüpft. Vorteilhafterweise wird hierzu die Korrelationsfunktion der Empfangsdaten DE verwendet und das Ergebnis weiter einem adaptiven Schwellwertentscheider, insbesondere einem Maximum Likelihood Detector (MLD), zugeführt, um die ursprünglichen Daten D zu erhalten, die der Datensenke B zugeführt werden.

Eine zuverlässige Datenübertragung auf einer ungeschirmten, energieübertragenden Leitung L, wird so trotz hohem Strom und überlagertem Störsignal erreicht, wobei gleichzeitig durch das Bandspreizverfahren das Übersprechen auf benachbarte Leitungen L₁,...,.Lₙ verhindert oder zumindest soweit vermindert wird, dass es keine störenden Einflüsse auf Übertragungen auf benachbarten Leitungen hat.

Die Anwendung des erfindungsgemäßen Verfahrens zur Datenübertragung wird ohne Einschränkung der Allgemeinheit am Beispiel einer Ladestation für Energiespeicher, insbesondere Akkumulatoren beschrieben. Dabei ist als Stromsenke SS ein Energiespeicher über eine Leitung L mit einer Stromquelle SQ in Form eines Ladegeräts verbundenen. Der auftretende Ladestrom entspricht dem energieübertragenden Grundsignal U und kann beispielsweise bis zu 1200A betragen. Am Energiespeicher ist üblicherweise eine Energiespeicherüberwachungseinheit angeordnet. Der Stromsensor S der Energiespeicherüberwachungseinheit ist typischerweise für einen Nominalstrom von +/-800A und einen Spitzenstrom von +/-1200A ausgelegt. Der mit dem Stromsensor S gemessene Strom wird mit einem 16-Bit AD-Wandler (ADC) digitalisiert. Somit ergibt sich nach Modulation für ein Sendedatensignal SU, in Form des Stromsignals bei verwendetem 16-Bit ADC für eine vorzeichenbehaftete Messwerterfassung eine minimale Auflösung (LSB) von 37mA, wobei eine Empfangsempfindlichkeit des ADC mit etwa 5 LSB zu erwarten ist. Jedoch sollte das Sendedatensignal SU deutlich größer als die minimale Auflösung multipliziert mit der Empfangsempfindlichkeit sein, um eine Detektion auf der Empfangseinheit TE gewährleisten zu können. Ein Sendedatensignal SU mit einer Amplitude von 1A entspricht etwa der fünffachen Empfangsempfindlichkeit und sollte dementsprechend mit dem ADC detektierbar sein. Dennoch ist das Sendedatensignal SU zu gering, um im Falle eines Übersprechens durch den ADC einer benachbarten Empfangseinheit TE erfasst zu werden: Bei einer Maximalspannung von 160V während der Energiespeicherladung ergibt sich eine maximale Verlustleistung von 160W, während der Ein-Phase der Modulation, was bei kurzer Sendedauer noch vertretbar ist. Jedoch können in der Anwendung durch das Ladegerät selbst Störungen auf der Leitung L in der Höhe von über 10A erzeugt werden. Da das Störsignal N einem dem Sendedatensignal SU ähnlichen Frequenzbereich hat, müsste das Sendedatensignal SU deutlich größer als das Störsignal N sein, um in der Empfangseinheit TE ein Empfangsdatensignal SUN zu erhalten, aus dem die zu übertragenden Daten D trotz Störsignal noch rekonstruierbar sind. Eine weitere Erhöhung des Sendedatensignals SU würde aber noch höhere Verluste bewirken. Zudem besteht durch ein hohes Sendedatensignal SU in Form eines Stromsignals die Gefahr induktiven Übersprechens auf benachbarte Leitungen L₁,...,Lₙ, was wiederum eine ausschließlichen Datenübertragung zwischen Sendeeinheit TS und Empfangseinheit TE verhindert. Der Pegel des Sendedatensignals SU liegt somit, um ein Übersprechen auf benachbarte Leitungen L₁,...,Lₙ zu verhindern, auf der Seite der Sendeeinheit TE deutlich unterhalb der zu erwartenden Störpegel N auf der Leitung L, was die Datenübertragung erheblich erschwert. Durch den entstehenden Prozessgewinn des erfindungsgemäßen Verfahrens sind die Daten D nach Übertragung an der Empfangseinheit TE dennoch rekonstruierbar. Die Übertragung des Sendedatensignals SU als Signal geringer Frequenz, d.h. mit einer Frequenz von etwa 1 kHz, verhindert größtenteils kapazitives Übersprechen. Aufgrund des kapazitiven Übersprechens würde auf den benachbarten Leitungen das Sendedatensignal SU eingestreut werden, und es könnte dementsprechend keine ausschließliche Datenübertragung zwischen Sendeeinheit TS und Empfangseinheit TE stattfinden.

Die zum Spreizen und Entspreizen notwendige Codefolge C1 kann in Form einer Pseudo-Random Noise (PN)-Folge vorliegen. Eine Pseudo-Random Noise Folge hat die statistischen Eigenschaften von Zufallsrauschen, und wird somit durch die Autokorrelationsfunktion charakterisiert. Um eine möglichst geringe periodische Autokorrelation zu erreichen und somit eine gute Synchronisierung zu erzielen, können für die Spreizung und Entspreizung als Codefolgen C1 Barker-Folgen gewählt werden. Diese Folgen haben die Eigenschaft, dass sich bei Aneinanderreihung mehrerer ebendieser Barker-Folgen die ursprüngliche Codefolgen C1 idealerweise niemals folgenübergreifend wiederholt, was bei der Detektion hilfreich ist. Bei einer beispielhaft gewählten Bitlänge der Codefolge C1 von L=13 beträgt die dadurch erzielbare Verbesserung des Empfangs Signal-Rausch-Verhältnisses, also der Prozessgewinn, 10*log(13)=11,13dB.

In der Datenquelle A kann auch eine vorbereitende Datenaufbereitung der zu übertragenden Rohdaten D0 erfolgen, wie anhand von Fig.4 beispielhaft gezeigt. Damit beim Auftreten von Bitfehlern in der Übertragung die gesamte Übertragung nicht wiederholt werden muss, kann die Verwendung von bekannten Fehlerkorrektureinheiten FE1 zur Fehlerkorrektur vorgesehen sein. Diese Fehlerkorrektur kann beispielsweise in Form einer FEC (Forward Error Correction), erfolgen. Im Fall einer FEC muss das Signal vor dem Absenden codiert und nach Empfang decodiert werden. Eine mögliche Form der FEC stellt der Hamming(7,4) Block Code dar. Dieser Code kann aufgrund seiner minimalen Hammingdistanz von dₘᵢₙ=3 einen Bitfehler in einem vier Bit-Nutzblock korrigieren, wobei dafür drei zusätzliche Paritätsbits eingesetzt werden und somit der gesamte Datenblock eine Länge von sieben Bit aufweist. Der Rohdatenblock D0 wird also beispielsweise der Fehlerkorrektur-Einheit FE1 zugeführt, was zum Erhalt der codierten Daten DC führt.

Zur Vermeidung von sogenannten Burstfehlern, welche den Datenblock zerstören würden, kann auch die Verwendung eines Interleavers I1 vorgesehen sein. Ein Interleaver I1 verschachtelt bekanntermaßen mehrere Datenblöcke, im vorliegenden Fall die codierten Daten DC und führt zu den Daten D, die nun verschachtelt und codiert sind. Die Daten D werden nun erfindungsgemäß gespreizt, übertragen und entspreizt. Im Falle eines Burst-Fehlers auf der Übertragung wird aufgrund der Verschachtelung nicht ein kompletter Bock von Rohdaten D0 oder gar Folgen dieser Blöcke, sondern lediglich ein Block der Daten D zerstört. Dieser Bock von Daten D entspricht nur Fragmenten einzelner Blöcke der Rohdaten D0, die aufgrund der Verschachtelung hintereinander gereiht sind. Diese Tatsache ermöglicht eine spätere Wiederherstellung der Rohdaten D0 in der Fehlerkorrektur-Einheit FE2 auf Seite der Empfangseinheit TE. Die Rohdaten D0 werden also verschachteltet und codiert in Form der Daten D am Ausgang der Datenquelle A bereitgestellt, um diese nach deren Spreizung zu übertragen.

Die Fehlerkorrektur und das Verschachteln müssen dabei nicht zwingend gemeinsam verwendet werden, sondern können auch einzeln angewendet werden, wobei auf der Empfängerseite natürlich das jeweilige Gegenstück implementiert sein muss.

Fig.5 zeigt beispielhaft den Inhalt der Datensenke B, welcher zur Rekonstruktion der ursprünglichen Rohdaten D0 dient. Die bereits demodulierten und entspreizten Daten D werden, sofern auch ein Interleaver I1 verwendet wurde, im De-Interleaver I2 entschachtelt. Die somit erhaltenen entschachtelten Daten DD werden in der optionalen Fehlerkorrektur-Einheit FE2 decodiert, sofern auf der Sendeseite ein Fehlerkorrekturverfahren angewendet wurde.

Diese Fehlerkorrektur-Einheit FE2 kann nun wie erwähnt die Fragmente eines möglichen Burst-Fehlers und sonstige auftretende Bitfehler korrigieren und liefert den ursprünglichen Block der Rohdaten D0.

Das oben beschriebene Verfahren kann verwendet werden, um beliebige Daten zwischen einer Sendeeinheit TS und einer Empfangseinheit TE zu übermitteln. Hierzu kann auch ein beliebiges Datenübertragungsprotokoll implementiert sein. In einer Ladestation von Energiespeichern, insbesondere Akkumulatoren, ist allerdings eine eindeutige Zuordnung zwischen Ladegerät und über die Ladeleitung angeschlossenem Energiespeicher notwendig. Dabei entspricht bei allgemeiner Betrachtung das Ladegerät der Stromquelle SQ und der Energiespeicher der Stromsenke SS. Das Energiespeicher-Überwachungsmodul des Energiespeichers muss an die Ladesteuereinheit des verbundenen Ladegeräts Parameter des Energiespeichers übertragen, damit die Ladesteuereinheit den Ladevorgang an den aktuellen Betriebszustand des Energiespeichers anpassen kann. Durch die normalerweise nach jedem Ladezyklus wechselnden Energiespeicher muss üblicherweise vor jedem Ladezyklus eine Zuordnung zwischen Stromquelle SQ und Stromsenke SS durchgeführt werden. Diese Adressvergabe bzw. Zuordnung der Energiespeicher zu Ladestation ist nur über eine Punktzu-Punkt Datenübertragung einer Direktverbindung möglich. Diese Direktverbindung, die einem ausschließlich durch Sendeeinheit TS und Empfangseinheit TE nutzbaren Übertragungskanal U entspricht, wäre theoretisch durch die Leitung L gegeben. Diese hat aber durch Übersprechen einer Powerline Communication von benachbarten Leitungen L die Eigenschaft eines nur gemeinsam benutzbaren Datenübertragungskanal für alle Ladegeräte und Akkumulatoren. Dieses Übersprechen verhindert damit unter anderem auch den Austausch einer eindeutigen Kennung bzw. einer Adresse. Nachdem durch das erfindungsgemäße Verfahren insbesondere auch das Übersprechen auf andere Leitungen L verhindert werden kann, kann dieses besonders vorteilhaft auch dazu verwendet werden, um eindeutige Adressen auszutauschen. Das wird nachfolgend erörtert.

Es ist also insbesondere vorteilhaft, das erfindungsmäße Verfahren der Datenkommunikation zur Zuordnung von Stromquellen SQ₁,...,SQₙ und damit verbundenen Stromsenken SS₁,...,SSₙ zu verwenden. Besonders auszeichnen kann sich diese Zuordnung bei austauschbaren Stromsenken SS₁,...,SSₙ, die mit beliebigen Stromquellen SQ₁,...,SQₙ verbundenen werden können. Dabei wird eine eindeutige Identifikation UID, insbesondere eine Adresse übertragen, um eine Zuordnung von Stromquelle SQ zu Stromsenke SS zu ermöglichen. Somit können die Daten D, bzw. Rohdaten D0, sofern eine Verschachtelung und/oder eine Fehlerkorrektur verwendet wird, im vorhin beschriebenen Verfahren eine eindeutige Identifikation UID in Form einer Adresse beinhalten. Diese kann bekanntermaßen optional in ein Paket mit Daten zur zyklischen Redundanzprüfung (CRC) verpackt sein, wobei das erwähnte Paket die Daten D bzw. Rohdaten D0 ausbildet. Die zyklische Redundanzprüfung CRC ist hilfreich, um trotz der oben beschriebenen Fehlerkorrekturverfahren bei der Datenübertragung entstandene Bitfehler zu detektieren.

Bei einfachen Anwendungen, kann die Datenübertragung nach dem Senden der eindeutigen Kennung UID und damit verbunden Daten D bzw. Rohdaten D0, schon abgeschlossen sein. So ist vorstellbar, dass eine Stromsenke SS, insbesondere ein aufladbarer Akkumulator, ihre Daten D bzw. Rohdaten D0, wie zum Beispiel Type, Kapazität, maximaler Ladestrom und dergleichen, an die Stromquelle SQ, insbesondere ein Ladegerät, sendet. Dazu muss die Stromquelle SQ einen Strom auf der Leitung L einprägen, der durch die Sendeeinheit TS an der Stromsenke SS moduliert wird. Die Stromquelle SQ hat dann die erforderlichen Informationen um eine auf die Stromsenke SS optimierte Energieübertragung bzw. Ladevorgang durchzuführen und eine weitere Kommunikation zwischen Stromquelle SQ und Stromsenke SS ist daher nicht mehr notwendig.

Allerdings kann auch nach der erfolgten Zuordnung von Stromquelle SQ und Stromsenke SS die weitere Datenübertragung auch unter Nutzung gängiger PLC-Kommunikationsprotokolle fortgesetzt werden. Das ist insbesondere deshalb möglich, weil die PLC-Kommunikation an sich unempfindlich gegenüber Störungen, und damit auch gegenüber Übersprechen von anderen Leitungen L, ist. Da die eindeutige Kennung UID, insbesondere Adresse, von Stromquelle SQ und Stromsenke SS bereits übertragen ist, kann die weitere Datenübertragung als Unicast in einem gemeinsam nutzbaren Datenübertragungskanal durchgeführt werden. Dies ist insbesondere möglich, da Übersprechen aufgrund der eindeutigen Kennung UID keinen Einfluss auf die Datenkommunikation hat. Jeder PLC-Sender kann einen PLC-Empfänger adressieren, wobei der PLC-Empfänger von einer anderen Leitung L übersprechende Signale ohne eindeutige Kennung UID ignorieren kann. Dazu bietet sich unter anderem die Verwendung bekannter Verfahren wie zum Beispiel Listen-Before-Talk an. Gegenüber der Datenübertragung der eindeutigen Identifikation erlaubt dies eine wesentlich höhere Datenübertragungsrate bei zugleich geringerer Verlustleistung. Es ist weiters möglich, dass die PLC-Kommunikationseinrichtung PL und die vorliegende Erfindung Schaltungsteile teilen, was weiter hilft den schaltungstechnischen Aufwand zu minimieren.

Auf Seite der Stromquelle SQ kann ein Anstecken einer Stromsenke SS beispielsweise durch eine Spannungs- oder Stromerkennung detektiert und danach die Übermittlung der eindeutigen Kennung UID wie oben beschrieben gestartet werden. Die Stromerkennung kann durch den bereits vorhandenen Sensor S₁,...,Sₙ erfolgen. Auf Seite der Stromsenke SS selbst kann bis zu einer erfolgreichen Übermittlung der eindeutigen Kennung UID in permanentem Empfangsmodus verweilt werden. Alternativ kann das Verbinden der Stromsenke SS auch auf Seite der Stromsenke SS erkannt und danach in den Empfangsmodus geschaltet werden, was hilft Energie zu sparen.

## Patentansprüche

1. Verfahren zur Datenübertragung in einer Anordnung mit einer Mehrzahl von Sendeeinheiten (TS) und einer Mehrzahl von Empfangseinheiten (TE), wobei eine erste Sendeeinheit (TS) über eine erste zumindest teilweise ungeschirmte elektrische Leitung (L₁) mit einer ersten Empfangseinheit (TE) verbunden wird, eine zweite Sendeeinheit (TS) über eine zweite zumindest teilweise ungeschirmte elektrische Leitung (Lₙ) mit einer zweiten Empfangseinheit (TE) verbunden wird, wobei Datensignale der ersten Leitung (L₁) auf die zweite Leitung (Lₙ) und/oder Datensignale der zweiten Leitung (Lₙ) auf die erste Leitung (L₁) übersprechen und über die erste Leitung (E₁) mit einem elektrischen Grundsignal (U) elektrische Energie (E) übertragen wird, wobei in der ersten Sendeeinheit (TS) Daten (D) auf das Grundsignal (U) aufmoduliert, über die erste Leitung (E₁) an die verbundene erste Empfangseinheit (TE) übertragen und in der ersten Empfangseinheit (TE) durch Demodulation rückgewonnen werden, **dadurch gekennzeichnet, dass** zur Vermeidung von Übersprechen von der ersten Leitung (L₁) auf die zweite Leitung (Lₙ) und/oder umgekehrt die Daten (D) in der ersten Sendeeinheit (TS) mittels eines Bandspreizverfahrens gespreizt, dem Grundsignal (U) aufmoduliert und über die Leitung (L) übertragen werden und nach Übertragung in der verbundenen ersten Empfangseinheit (TE) durch Demodulation und Entspreizung zurückgewonnen werden.

2. Verfahren nach Anspruch 1, **dadurch gekennzeichnet, dass** das Direkt Sequence Spread Spectrum als Bandspreizverfahren verwendet wird, wobei zur Spreizung eine Codefolge (C1) dient.

3. Verfahren nach Anspruch 2, **dadurch gekennzeichnet, dass** zur Entspreizung die Korrelationsfunktion der Empfangsdaten (DE) und der Codefolge (C1) gebildet wird und ein adaptiver Schwellwertentscheider verwendet wird, um die Daten (D) zu erhalten.

4. Verfahren nach einem der Ansprüche 1 bis 3, **dadurch gekennzeichnet, dass** die Modulation mittels Amplitude Shift Keying erfolgt.

5. Verfahren nach einem der Ansprüche 1 bis 4, **dadurch gekennzeichnet, dass** ein, Stromsignal auf das Grundsignal (U) aufmoduliert wird.

6. Verfahren nach Anspruch 4 und 5, **dadurch gekennzeichnet, dass** das Amplitude Shift Keying mittels einer Impedanzänderung, die einen Teil der Grundsignalenergie umwandelt, durchgeführt wird.

7. Verfahren nach einem der Ansprüche 1 bis 6, **dadurch gekennzeichnet, dass** die zu übertragenden Rohdaten (D0) vor dem Spreizen mit einem Fehlerkorrekturverfahren codiert werden und die Daten (D) nach dem Entspreizen mit dem Fehlerkorrekturverfahren decodiert werden.

8. Verfahren nach Anspruch 7, **dadurch gekennzeichnet, dass** die durch das Fehlerkorrekturverfahren codierten Daten (DC) vor dem Spreizen verschachtelt und die entspreizten Daten (D) entschachtelt werden.

9. Verfahren nach einem der Ansprüche 1 bis 8, **dadurch gekennzeichnet, dass** das aufmodulierte Signal eine kleinere maximale Amplitude als ein auftretendes Störsignal (N) aufweist.

10. Verwendung des Verfahrens nach einem der Ansprüche 1 bis 9 zur Übermittlung einer eindeutigen Kennung (UID) von einer Stromquelle (SQ) bzw. Stromsenke (SS) an eine Stromsenke (SS) bzw. Stromquelle (SQ) nachdem eine Verbindung zwischen der Stromquelle (SQ) und Stromsenke (SS) über die Leitung (L) hergestellt wurde.

11. Verwendung nach Anspruch 10, **dadurch gekennzeichnet, dass** nach erfolgreicher Zuordnung der Stromquelle (SQ) und der Stromsenke (SS) durch die eindeutige Kennung (UID) die weitere Datenübertragung der zugeordneten Stromquelle (SQ) und Stromsenke (SS) über bekannte Powerline-Communication erfolgt.

12. Vorrichtung zur Datenübertragung in einer Anordnung mit einer Mehrzahl von Sendeeinheiten (TS) und einer Mehrzahl von Empfangseinheiten (TE), wobei eine erste Sendeeinheit (TS) über eine erste zumindest teilweise ungeschirmte elektrische Leitung (L₁) mit einer ersten Empfangseinheit (TE) verbunden ist, eine zweite Sendeeinheit (TS) über eine zweite zumindest teilweise ungeschirmte elektrische Leitung (Lₙ) mit einer zweiten Empfangseinheit (TE) verbunden wird, wobei die erste und zweite Leitung (L₁, Lₙ) zur Übertragung elektrischer Energie (E) vorgesehen sind und Datensignale der ersten Leitung (L₁) auf die zweite Leitung (Lₙ) und/oder umgekehrt übersprechen, wobei in zumindest der ersten Sendeeinheit (TS) ein Modulator (M1) vorgesehen ist, der Daten (D) auf ein Grundsignal (U) aufmoduliert und an der über die erste Leitung (L₁) verbundenen ersten Empfangseinheit (TE) ein Demodulator (M2) vorgesehen ist, der das über die erste Leitung (L₁) empfangene Empfangsdatensignal (SUN) demoduliert, **dadurch gekennzeichnet, dass** zur Vermeidung von Übersprechen von der ersten Leitung (L₁) auf die zweite Leitung (Lₙ) und/oder umgekehrt in der ersten Sendeeinheit (TS) eine Spreizeinheit (E1) und ein Modulator (M1) vorgesehen sind, wobei die Spreizeinheit (E1) Daten (D) mittels eines Bandspreizverfahrens spreizt und der Modulator (M1) die daraus resultierenden gespreizten Daten (DS) auf das Grundsignal (U) aufmoduliert, und dass in der verbundenen ersten Empfangseinheit (TE) ein Demodulator (M2) und eine Entspreizeinheit (E2) vorgesehen ist, wobei der Demodulator (M2) das Empfangsdatensignal (SUN) demoduliert, und die Entspreizeinheit (E2) die daraus erhaltenen Empfangsdaten (DE) mittels des Bandspreizverfahrens entspreizt, um die Daten (D) rückzugewinnen.

13. Vorrichtung nach Anspruch 12, **dadurch gekennzeichnet, dass** der Modulator (M1) als von einem schaltenden Element geschaltete Konstantstromsenke (SSC) ausgeführt ist.

14. Vorrichtung nach Anspruch 12 oder 13, **dadurch gekennzeichnet, dass** in der zumindest einen Sendeeinheit (TS) vor der Spreizeinheit (E1) eine Fehlerkorrektureinheit (FE1) und in der verbundenen Empfangseinheit (TE) nach der Entspreizeinheit (E2) eine Fehlerkorrektureinheit (FE2) vorgesehen ist.

15. Vorrichtung nach einem der Ansprüche 12 bis 14, **dadurch gekennzeichnet, dass** in der zumindest einen Sendeeinheit (TS) vor der Spreizeinheit (E1) eine Verschachtelungseinheit (I1) und in der verbundenen Empfangseinheit (TE) nach der Entspreizeinheit (E2) eine Entschachtelungseinheit (I2) vorgesehen sind.

16. Vorrichtung nach einem der Ansprüche 12 bis 15, **dadurch gekennzeichnet, dass** in der zumindest einen Sendeeinheit (TS) und in der verbundenen Empfangseinheit (TE) zusätzliche Powerline-Kommunikationseinheiten (PL) vorhanden sind.

## Claims

1. A method for data transmission in an arrangement having a plurality of transmitting units (TS) and a plurality of receiving units (TE), wherein a first transmitting unit (TS) is connected via a first at least partially unshielded electrical line (L₁) to a first receiving unit (TE), and a second transmitting unit (TS) is connected via a second at least partially unshielded electrical line (Lₙ) to a second receiving unit, wherein data signals of the first line (L₁) crosstalk on the second line (Lₙ) and/or data signals of the second line (Lₙ) crosstalk on the first line (L₁), and electrical energy (E) is transmitted via the first line (L₁) with an electrical base signal (U), wherein data (D) is modulated in the first transmitting unit (TS) on the base signal (U), transmitted via the first line (L₁) to the connected first receiving unit (TE), and recovered in the first transmitting unit (TE) by demodulation, **characterized in that** in order to prevent crosstalk of the first line (L₁) on the second line (Lₙ) and/or vice versa, the data (D) is spread in the first transmitting unit (TS) by means of a bandspread method, modulated to the base signal (U), and transmitted via the line (L), and is recovered after transmission in the connected first receiving unit (TE) by demodulation and despreading.

2. The method according to claim 1, **characterized in that** the direct sequence spread spectrum is used as the bandspread method, wherein a code sequence (C1) is used for the spreading.

3. The method according to claim 2, **characterized in that** for the despreading, the correlation function of the received data (DE) and the code sequence (C1) is formed and an adaptive threshold value decider is used in order to obtain the data (D).

4. The method according to any of claims 1 to 3, **characterized in that** the modulation is done by means of amplitude shift keying.

5. The method according to any of claims 1 to 4, **characterized in that** a current signal is modulated onto the base signal (U).

6. The method according to claim 4 and 5, **characterized in that** the amplitude shift keying is carried out by means of an impedance change that converts a part of the base signal energy.

7. The method according to any of claims 1 to 6, **characterized in that** the raw data (D0) to be transmitted is encoded prior to the spreading with an error correction method, and the data (D) is decoded after the spreading with the error correction method.

8. The method according to claim 7, **characterized in that** the data (DC) having been encoded by the error correction method is interleaved prior to the spreading and the despread data (D) is deinterleaved.

9. The method according to any of claims 1 to 8, **characterized in that** the modulated signal has a smaller maximum amplitude than an occurring interference signal (N).

10. Use of the method according to any of claims 1 to 9 to transmit a unique identifier (UID) from a current source (SQ) or a current sink (SS) to a current sink (SS) or a current source (SQ) after a connection has been established between the current source (SQ) and current sink (SS) via the line (L).

11. The use according to claim 10, **characterized in that** after successful association of the current source (SQ) and the current sink (SS) through the unique identifier (UID), the further data transmission of the associated current source (SQ) and current sink (SS) takes place via known powerline communication.

12. A device for data transmission in an arrangement having a plurality of transmitting units (TS) and a plurality of receiving units (TE), wherein a first transmitting unit (TS) is connected via a first at least partially unshielded electrical line (L₁) to a first receiving unit (TE), and a second transmitting unit (TS) is connected via a second at least partially unshielded electrical line (Lₙ) to a second receiving unit, wherein the first and second line (L₁, Lₙ) are provided for transmitting electrical energy (E) and data signals of the first line (L₁) crosstalk on the second line (Lₙ) and/or vice versa, wherein at least the first transmitting unit (TS) has provided therein a modulator (M1) that modulates data (D) to a base signal (U), and the first receiving unit (TE) connected via the first line (L₁) has provided thereon a demodulator (M2) that demodulates the received data signal (SUN) received via the first line (L₁), **characterized in that** a spreading unit (E1) and a modulator (M1) are provided in the first transmitting unit (TS) in order to prevent crosstalk of the first line (L₁) on the second line (Lₙ) and/or vice versa, wherein the spreading unit (E1) spreads data (D) by means of a bandspread method, and the modulator (M1) modulates, to the base signal (U), the spread data (DS) resulting therefrom, and **in that** a modulator (M2) and a despreading unit (E2) are provided in the connected first receiving unit (TE) wherein the demodulator (M2) demodulates the received data signal (SUN), and the despreading unit (E2) despreads, by means of the bandspread method, the received data (DE) obtained therefrom, in order to recover the data (D).

13. The device according to claim 12, **characterized in that** the modulator (M1) is configured as a constant current sink (SSC) connected by a switching element.

14. The device according to claim 12 or 13, **characterized in that** an error correction unit (FE1) is provided before the spreading unit (E1) in the at least one transmitting unit (TS), and an error correction unit (FE2) is provided after the despreading unit (E2) in the connected receiving unit (TE).

15. The device according to any of claims 12 to 14, **characterized in that** an interleaving unit (I1) is provided before the spreading unit (E1) in the at least one transmitting unit (TS), and an interleaving unit (I2) is provided after the despreading unit (E2) in the connected receiving unit (TE).

16. The device according to any of claims 12 to 15, **characterized in that** additional powerline communication units (PL) are present in the at least one transmitting unit (TS) and in the connected receiving unit (TE).

## Revendications

1. Procédé de transmission de données dans un agencement avec une pluralité d'unités émettrices (TS) et une pluralité d'unités réceptrices (TE), dans lequel une première unité émettrice (TS) est connectée à une première unité réceptrice (TE) via une première ligne électrique (L₁) au moins en partie non protégée, une deuxième unité émettrice (TS) est connectée à une deuxième unité réceptrice (TE) via une deuxième ligne électrique (Lₙ) au moins en partie non protégée, dans lequel des signaux de données de la première ligne (L₁) sont transmodulés sur la deuxième ligne (Lₙ) et/ou des signaux de données de la deuxième ligne (Lₙ) sur la première ligne (L₁) et de l'énergie électrique (E) est transmise via la première ligne (L₁) avec un signal de base électrique (U), dans lequel, dans la première unité réceptrice (TS), des données (D) sont modulées sur le signal de base (U), transférées via la première ligne (L₁) à la première unité réceptrice connectée (TE) et récupérées dans la première unité réceptrice (TE) par démodulation, **caractérisé en ce que**, pour éviter la transmodulation de la première ligne (L₁) sur la deuxième ligne (Lₙ) et/ou en sens inverse, les données (D) sont étalées dans la première unité émettrice (TS) au moyen d'un procédé d'étalement de bande, modulées sur le signal de base (U) et transférées via la ligne (L) et, après transmission dans la première unité réceptrice connectée (TE), récupérées par démodulation et désétalement.

2. Procédé selon la revendication 1, **caractérisé en ce que** le spectre d'étalement de séquence directe est utilisé comme procédé d'étalement de bande, dans lequel on se sert d'une suite de codes (C1) pour l'étalement.

3. Procédé selon la revendication 2, **caractérisé en ce que**, pour le désétalement, la fonction de corrélation des données de réception (DE) et de la suite de codes (C1) est formée et un décideur de valeur de seuil est utilisé pour obtenir les données (D).

4. Procédé selon l'une quelconque des revendications 1 à 3, **caractérisé en ce que** la modulation se fait par modulation par déplacement d'amplitudes.

5. Procédé selon l'une quelconque des revendications 1 à 4, **caractérisé en ce qu'**un signal de courant est modulé sur le signal de base (U).

6. Procédé selon les revendications 4 et 5, **caractérisé en ce que** la modulation par déplacements d'amplitudes est réalisée par modification d'impédance qui convertit une partie de l'énergie du signal de base.

7. Procédé selon l'une quelconque des revendications 1 à 6, **caractérisé en ce que** les données brutes à transmettre (D0) sont codées avant l'étalement par un procédé de corrections d'erreurs et les données (D) sont décodées après le désétalement par le procédé de correction d'erreurs.

8. Procédé selon la revendication 7, **caractérisé en ce que** les données (DC) codées par le procédé de correction d'erreurs sont imbriquées avant l'étalement et les données désétalées (D) sont désimbriquées.

9. Procédé selon l'une quelconque des revendications 1 à 8, **caractérisé en ce que** le signal modulé présente une amplitude maximale plus petite qu'un signal parasite apparaissant (N).

10. Utilisation du procédé selon l'une quelconque des revendications 1 à 9 pour la transmission d'une caractéristique claire (UID) d'une source de courant (SQ) ou d'un puits de courant (SS) à un puits de courant (SS) ou une source de courant (SQ) après avoir établi une connexion entre la source de courant (SQ) et le puits de courant (SS) via la ligne (L).

11. Utilisation selon la revendication 10, **caractérisée en ce qu'**après affectation couronnée de succès de la source de courant (SQ) et du puits de courant (SS) par la caractéristique claire (UID), l'autre transmission de données de la source de courant (SQ) et du puits de courant (SS) affectés se fait par communication sur lignes de haute tension connue.

12. Dispositif de transmission de données dans un agencement avec une pluralité d'unités émettrices (TS) et une pluralité d'unités réceptrices (TE), dans lequel une première unité émettrice (TS) est connectée à une première unité réceptrice (TE) via une première ligne électrique (L₁) au moins en partie non protégée, une deuxième unité émettrice (TS) est connectée à une deuxième unité réceptrice (TE) via une deuxième ligne électrique (Lₙ) au moins en partie non protégée, dans lequel la première et la deuxième ligne (L₁, Lₙ) sont prévues pour transmettre de l'énergie électrique (E) et des signaux de données de la première ligne (L₁) sont transmodulés sur la deuxième ligne (Lₙ) et/ou vice versa, dans lequel il est prévu dans au moins la première unité réceptrice (TS) un modulateur (M1) qui module des données sur un signal de base (U) et il est prévu sur la première unité réceptrice (TE) connectée via la première ligne (L₁) un démodulateur (M2), qui démodule le signal de données de réception (SUN) reçues via la première ligne (L₁), **caractérisé en ce que**, pour éviter la transmodulation de la première ligne (L1) sur la deuxième ligne (Ln) et/ou vice versa, il est prévu dans la première unité émettrice (TS) une unité d'étalement (E1) et un modulateur (M1), dans lequel l'unité d'étalement (E1) étale des données au moyen d'un procédé d'étalement de bande et le modulateur (M1) module les données étalées (DS) qui en résultent sur le signal de base (U) et **en ce qu'**il est prévu dans la première unité réceptrice connectée (TE) un démodulateur et une unité de désétalement (E2), dans lequel le démodulateur (M2) démodule le signal de données de réception (SUN) et l'unité de désétalement (E2) désétale les données de réception (DE) qui en résultent pour récupérer les données (D).

13. Procédé selon la revendication 12, **caractérisé en ce que** le modulateur (M1) se présente sous la forme d'un puits de courant constant (SSC) commuté par un élément de commutation.

14. Procédé selon la revendication 12 ou 13, **caractérisé en ce qu'**il est prévu dans la au moins une unité émettrice (TS) avant l'unité d'étalement (E1) une unité de correction d'erreurs (FE1) et dans l'unité réceptrice connectée (TE) après l'unité de désétalement (E2) une unité de correction d'erreurs (FE2).

15. Procédé selon l'une quelconque des revendications 12 à 14, **caractérisé en ce qu'**il est prévu dans la au moins une unité émettrice (TS) avant l'unité d'étalement (E1) une unité d'imbrication (I1) et dans l'unité réceptrice connectée (TE) après l'unité de désétalement (E2) une unité de désimbrication (I2).

16. Procédé selon l'une quelconque des revendications 12 à 15, **caractérisé en ce que** sont présentes dans la au moins une unité émettrice (TS) et dans l'unité réceptrice connectée (TE) des unités supplémentaires de communication sur lignes de haute tension (PL).
